# EUROPEAN PATENT SPECIFICATION

(11) **EP 3 170 614 B1**
(45) Date of publication and mention of the grant of the patent: **27.02.2019**
(21) Application number: 15382579.9
(22) Date of filing: 20.11.2015
(51) Int. Cl.: B23K 33/00

(54) **JOINING PLATES AT AN ANGLE**
VERBINDUNG VON PLATTEN IN EINEM WINKEL
PLAQUES DE JONCTION AU NIVEAU D'UN ANGLE

(43) Date of publication of application: 24.05.2017
(73) Proprietor: GE Renewable Technologies Wind B.V., 4817 PA Breda (NL)
(72) Inventor: HERENCIA MORA, Rubén, 08206 Sabadell (ES)
(74) Representative: ZBM Patents - Zea, Barlocci & Markvardsen

(56) References cited:
- EP-A1- 2 402 106
- FR-A1- 2 446 930
- JP-A- H01 241 380
- US-A1- 2007 151 089

## Description

The present disclosure relates to methods of joining plates at an angle in between, in particular for building structures having a polygonal cross-section. The disclosure further relates to wind turbine towers comprising a polygonal tower section and polygonal wind turbine towers being made by such methods.

### BACKGROUND

Welding of plates at an angle is well known in a wide variety of fields for making structures having e.g. polygonal cross-sections.

Typically, two plates are provided, inclined at 45° with respect to the horizontal and are welded by a robot that has a filler electrode. The filler electrode is thus melted and deposited in the weld zone. To do this, each plate must be placed in a support. The plates typically comprise bevelled edges so as to define a bevel groove for depositing the welding material. In some cases, to ensure an adequate amount of penetration at the joint, the plates are first welded on one side, then rotated and welded on the other side. When a plate is to be welded at an opposite side to an additional plate, this process has to be repeated again for welding the additional plate. Welding at both sides is rather costly and time-consuming.

For manufacturing a structure having a polygonal cross-section, such as e.g. a polygonal wind turbine tower section, this has to be repeated according to the number of sides of the polygon. The process may thus take a relatively long time.

Furthermore, when a polygonal tower section is formed this way, the various sides of the sections are joined to each other exactly along lines of stress concentrations. The thickness of the plates thus has to be increased to compensate for these stress concentrations.

In the field of wind turbine towers, it is known to provide bolts and screws to join two consecutive sides to build towers having polygonal cross-sections. Document US20090021019 describes such towers and methods. However this entails rather cumbersome and time consuming installation process. Document JPH01241380 describes to stably obtain a weld zone with high quality by specifying an interval between a preceding electrode and a succeeding electrode, a current ratio and a voltage ratio of the preceding electrode to the succeeding electrode, distances between electrification parts and the groove bottom and tilt angles to prevent the occurrence of internal defects such as high temperature cracking.

It is an object of the present disclosure to provide methods of joining plates with an angle in between them, especially suitable for building wind turbine tower sections having a polygonal cross-section that at least partially overcome the prior art drawbacks.

### SUMMARY

In a first aspect, a method of joining plates at an angle in between them is provided. The method comprises providing a first plate having opposed top and bottom surfaces, a first side-edge, and a second side-edge opposite to the first side-edge, providing a second plate having opposed top and bottom surfaces and a first side-edge, removing material from the top surface and the first side-edge of the first plate to obtain a first adapted weld region of the first plate, wherein the first adapted weld region of the first plate has an inclined portion of the top surface near the first side-edge of the first plate and a straight first side-edge. The method further comprises removing material from one of the top and bottom surfaces and the first side-edge of the second plate to obtain an adapted weld region of the second plate, wherein the adapted weld region of the second plate comprises a first inclined portion of the one of the top and bottom surfaces near the first side-edge of the second plate. And the method further comprises, providing the first plate in a substantially horizontal position such that the straight first side-edge of the first plate is substantially vertical, providing the second plate in an inclined position with respect to the first plate such that the first inclined portion of the one of the top and bottom surfaces of the second plate substantially abuts the straight first side-edge of the first plate, and welding together the first and second plates.

In this aspect, the plates are provided with a specific bevel (through removal of material). Furthermore, the bevels are defined in such a way that the welding operation can be done with one plate in a substantially horizontal position (top and bottom surfaces). This further facilitates the welding operation as no special or complicated positions need to be arranged for either personnel or robots used to carry out the welding operation.

Throughout the present disclosure, removing material from a plate surface and/or edge may include bevelling the plate by any known method such as e.g. machining, oxy-cutting or plasma bevelling among others. Alternatively other processes such as sand blasting, hydro-blasting or high-pressure jetting or even further undisclosed processes may be foreseen.

Further in this aspect, the point at which an outer surface (wall) of the final structure changes direction, i.e. the vertices in e.g. a polygonal structure do not coincide with the welding points thus reducing stress at the weld point. This extends lifetime of the weld and enhances buckling resistance of the final structure.

Optionally in this aspect, a method of joining plates at an angle involving a single pass welding method may be provided. In a single pass welding process, in addition to eliminating inter-pass weld defects that may be formed when different welding passes are present, lower gas consumption e.g. in shielding the weld and less welding time per weld (i.e., multi-pass techniques take more time and are therefore more costly) are involved. It is thus a cost-effective method.

This reduces overall costs of manufacture of a structure made by joining together plates using these methods such as e.g. structures having a polygonal cross-section. Examples of such structures may e.g. be polygonal wind turbine towers or tower sections.

As used herein, the term "single pass" refers to welding only from one side of the abutting plates and in one pass.

Throughout the present description and claims a polygonal cross-section should be understood as a section with the shape of a polygon. And a polygon should be understood as a plane figure bounded by a finite chain of straight line segments closing in a loop to form a closed chain or circuit. These segments are called its sides (or edges), and the points where two sides meet are the polygon's vertices (or corners).

In some examples, the method of joining plates may further comprise removing material from the other of the top and bottom surfaces and the first side-edge of the second plate such that the adapted weld region of the second plate further comprises an inclined portion of the other of the top and bottom surfaces near the first side-edge of the second plate, wherein the inclined portion of the other of the top and bottom surfaces of the second plate is substantially horizontal when the second plate is in the inclined position. In these cases, the removal of material from the other of the top and bottom surfaces, i.e. from the surface that will not be welded, involves a smoother outer surface (wall) of the final structure made by joining plates at an angle with methods substantially as hereinbefore described.

In some examples, the method may further comprise providing a third plate having opposed top and bottom surfaces and a first side-edge. In these examples, removing material from the first plate may further comprise removing material from the top surface and the second side-edge of the first plate to obtain a second adapted weld region of the first plate wherein the second adapted weld region of the first plate has an inclined portion of the top surface near the second side-edge of the first plate and a straight second side-edge. And the method may further comprise, removing material from one of the top and bottom surfaces and the first side-edge of the third plate to obtain an adapted weld region of the third plate, wherein the adapted weld region of the third plate comprises a first inclined portion of the one of the top and bottom surfaces near the first side-edge of the third plate. The method may further comprise, providing the third plate in an inclined position with respect to the first plate such that the first inclined portion of the one of the top and bottom surfaces of the third plate substantially abuts the straight second side-edge of the first plate, and welding together the first and third plate.

In some of these examples, welding together the first and third plate may be done substantially at the same time as welding together the first and second plate. This further reduces time involved in welding together three plates. This involves further time reduction when manufacturing a polygonal structure by welding plates.

In some examples, the adapted weld region of the second plate (and/or the third plate in those cases having a third plate) may further comprise a second inclined portion of the one of the top and bottom surfaces, wherein an angle of inclination of the second inclined portion may be lower than an angle of inclination of the first inclined portion. Orientation and positioning of the second (and/or third plate) may thus be varied so as to define a desired angle in between the plates, depending e.g. on the shape of the final structure. The welding angle between the first and second plates (and/or the third plate in those cases having a third plate) may also be reduced with such a second inclined portion. This reduces the filler material needed in the weld.

In some examples, the first side-edge and a second side-edge opposite to the first side-edge of the plates may be parallel to each other. In others, a distance between the first side-edge and a second side-edge opposite to the first side-edge of the plates may decrease or increase along a length of the plates. This way, the plates may have a rectangular, trapezoidal or triangular shape. Triangular and trapezoidal plates may be especially suitable for building towers or tower sections, e.g. polygonal wind turbine towers, having an increased diameter at or towards its base.

In a further aspect, a polygonal wind turbine tower section is provided. The tower section is made by joining together n number of plates at an angle in between them according to any of the methods substantially as hereinbefore described so as to form a polygonal cross-section. A polygonal wind turbine tower may be provided by joining together one or more tower sections substantially as hereinbefore described, the tower sections being arranged vertically one above the other.

In a still further aspect a wind turbine is provided. The wind turbine comprises a nacelle being supported on a vertical tower, wherein the tower comprises one or more polygonal tower sections substantially as hereinbefore described.

### BRIEF DESCRIPTION OF THE DRAWINGS

Non-limiting examples of the present disclosure will be described in the following, with reference to the appended drawings, in which:
Figures 1a - 1d show a sequence of a method of joining plates with an angle in between them according to an example;
Figures 2a, 2b and 3 show more examples of methods of joining plates with angle in between them;
Figures 4a - 4b show examples of positioning welding robots for carrying out any of the methods of the examples of figures 1a - 3;
Figures 5a - 5h show more examples of positioning welding robots for carrying out any of the methods of the examples of figures 4a - 4b; and
Figure 6 shows more examples of positioning welding robots for carrying out any of the examples of methods described herein for closing a polygonal structure.

### DETAILED DESCRIPTION OF EXAMPLES

Throughout the following figures the same reference numbers will be used for matching parts.

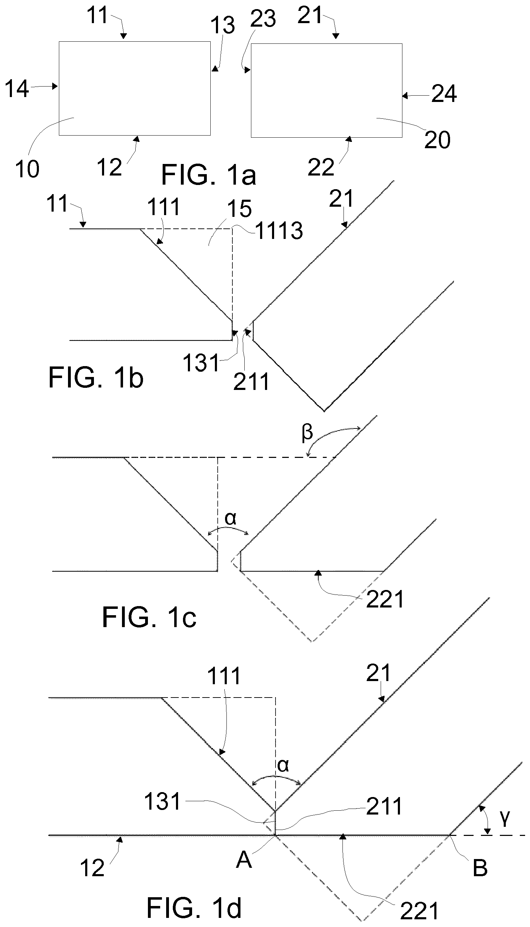

Figures 1a - 1d show a sequence of a method of joining plates with an angle β in between them according to an example.

A first plate 10 may comprise a top horizontal surface 11, a bottom horizontal surface 12 opposite to the top surface 11, a first side-edge 13 and a second side-edge 14 opposite to the first side-edge 13. A second plate 20 may comprise a top horizontal surface 21, a bottom horizontal surface 22 opposite to the top surface 21, a first side-edge 23 and a second side-edge 24 opposite to the first side-edge 23.

As shown in figure 1a, initially the first 13, 23 and second 23, 24 side-edges may be parallel to each other along a length of the plates. In alternative examples the plates may comprise a varying distance between the first side-edge and the second side-edge, i.e. a trapezoidal cross-section.

As shown in figure 1b, the method may comprise a first step of machining or bevelling the first plate 10 by removing material from the top surface 11 and the first side-edge 13 to obtain a first adapted weld region. Alternatively, in this example, and in all other examples disclosed herein, other known ways of removing material from a plate such as oxy-cutting or plasma bevelling among others may be foreseen. The first adapted weld region may comprise an inclined portion 111 of the top surface near the first side-edge 13 and a straight first side-edge 131. In figure 1b, removing material from the top surface may be exemplified by removing triangle 15 from a corner 1113 of the first plate 10.

The method of joining plates may further comprise machining (oxy-cutting, plasma bevelling or similar) the second plate 20 by removing material from the top surface 21 and the first side-edge 23 to obtain an adapted weld region. The adapted weld region may comprise an inclined portion 211 of the top surface near the first side-edge 23. See figure 1b.

In some examples (as shown in figure 1c), machining the second plate 20 may further comprise removing material from the bottom surface 22 and the first side-edge 23 to obtain an inclined portion 221 of the bottom surface near the first side-edge 23.

In the examples of figures 1b or 1c, the first plate 10 and the second plate 20 may be ready to be welded together with a welding angle α in between the top surface inclined portion 111 of the first plate and the top surface 21 of the second plate.

As shown in figure 1d, the method may further comprise providing the first plate 10 in a substantially horizontal position such that the straight first side-edge 131 may be substantially vertical and providing the second plate in an inclined position with an angle γ with respect to the horizontal, wherein the angle γ may be complementary to the angle β between the plates, i.e. γ equals to 180° minus β such that inclined portion 211 of the top surface of the second plate 20 substantially abuts the straight first side-edge 131 of the first plate 10. In this example, by bringing together the first 10 and second 20 plates with the straight first side-edge 131 of the first plate substantially abutting the inclined portion 211 of the second plate, the welding angle α between the top surface inclined portion 111 of the first plate 10 and the top surface 21 of the second plate 20 may be defined.

In this method, a welding zone A, i.e. the abutting area between surfaces 211 and 131 no longer coincides with a stress point B defined by a change of direction. Or put in an example, when a polygonal structure such as e.g. a polygonal wind turbine tower section is built by joining together plates, the vertices (stress points) of the polygonal cross-section can no longer coincide with the welding points between the plates. This extends lifetime of the welding and thus of the structure made by joining plates with any of these methods.

Further in this example, the inclined portion 221 of the bottom surface of the second plate 20 may also be horizontal thus extending the bottom surface 12 of the first plate. This involves a smoother outer surface of a final structure made by joining the plates with methods substantially as hereinbefore described.

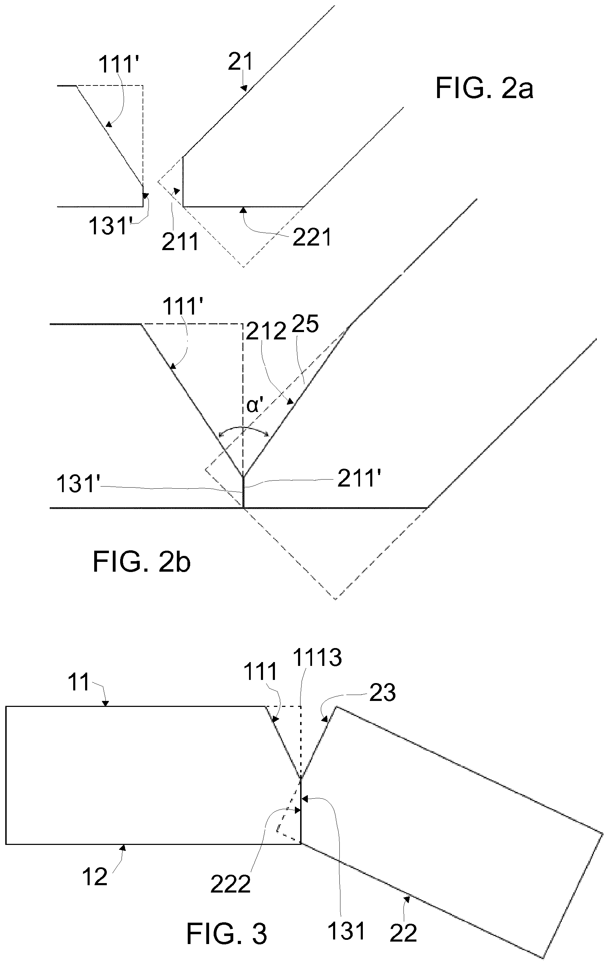

The example of figures 2a-2b differs from that of figures 1a-1d in the position of the second plate 20. This may depend e.g. on the number of sides of the polygonal structure to be built by joining the plates at an angle or in the width of the plates being used.

To vary the position of the second plate the method may start from plates being machined or bevelled in a similar manner as explained in connection with figure 1c. In some cases, an inclined portion 111' of the top surface of the first plate may have a different inclination than that of the example of figures 1a - 1d to define a different welding angle α' as shown in figure 2a. In the example of figure 2a the welding angle α' may be smaller thus reducing e.g. the filler material needed in the weld.

Further in this example, as shown in figure 2b, the method may comprise further removing material from the top surface 21 of the second plate 20 near the inclined portion 211 of the top surface of the second plate 20 to obtain a second inclined portion 212 of the top surface of the second plate 20. This may be exemplified in figure 2b, by removing triangle 25 from the second plate 20. Furthermore, welding angle α' may be smaller thus reducing e.g. the filler material needed in the weld.

In some examples, an angle of inclination of the inclined portion 211 of the top surface may be higher than that of the second inclined portion 212. The rest of the method explained in connection with figure 1d may also be applied *mutatis mutandis* to the example of figure 2b. In these examples, the straight first side-edge 131' (see figure 2a) may be provided abutting a portion 211' of the inclined portion 211 of the top surface of the second plate 20 that may be left once the step of further removing triangle 25 from the second plate 20 is done.

The example of figure 3 differs from that of figures 1a - 2d in that a single pass welding may be done on surfaces of the plates that will be left outside if a polygonal structure is closed. To do this, the method of joining plates at an angle in between them differs from the methods described in connection with figures 1a - 2d in the side (from top to bottom) at which the second plate is initially bevelled or machined.

In the example of figure 3, the method may thus differ from that of figures 1a - 2d in that machining the second plate 20 may comprise removing material from the bottom surface 22 and the first side-edge 23 to obtain an adapted weld region. The adapted weld region may comprise an inclined portion 222 of the bottom surface near the first side-edge 23. And the step of providing the second plate 20 in an inclined position with respect to the first plate 10 may comprise putting together the first 10 and second 20 plates such that the inclined portion 222 of the bottom surface of the second plate 20 substantially abuts the straight first side-edge 131.

In some examples (similarly to what was explained in connection with figure 1c), machining the second plate 20 may further comprise removing material from the top surface 21 and the first side-edge 23 to obtain an inclined portion (not shown) of the top surface near the first side-edge 23 such that the inclined portion of the top surface of the second plate 20 may be horizontal when inclined portion 222 of the bottom surface of the second plate 20 is abutting the straight first side-edge 131.

Further examples explained in connection with figures 2a - 2b to vary the position of the second plate and/or reduce the welding angle, may also be applicable *mutatis mutandis* to the method exemplified in figure 3.

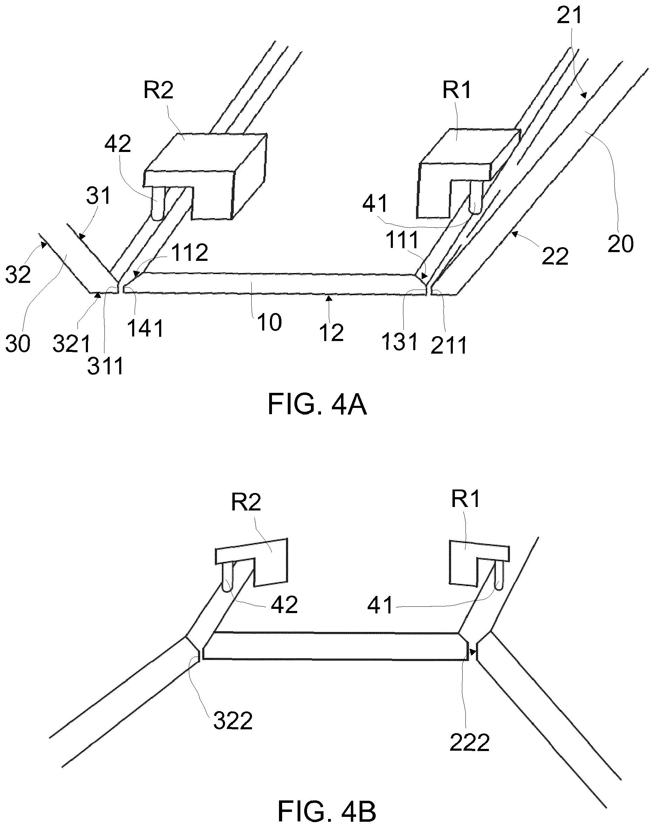

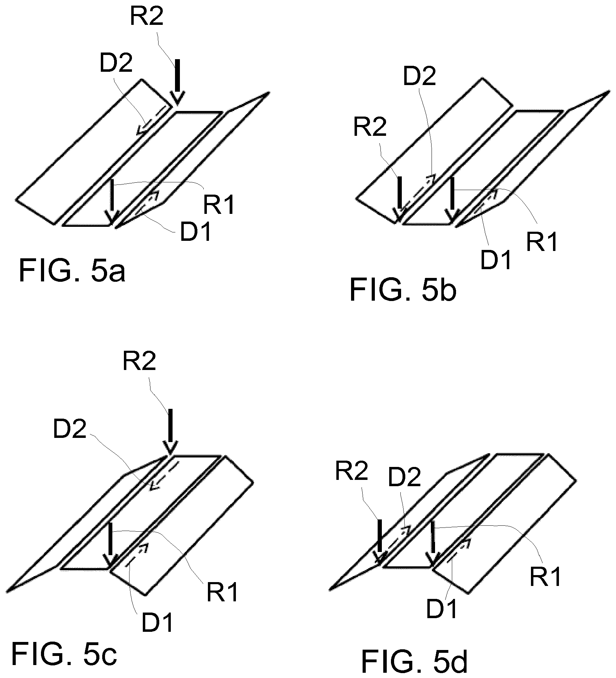

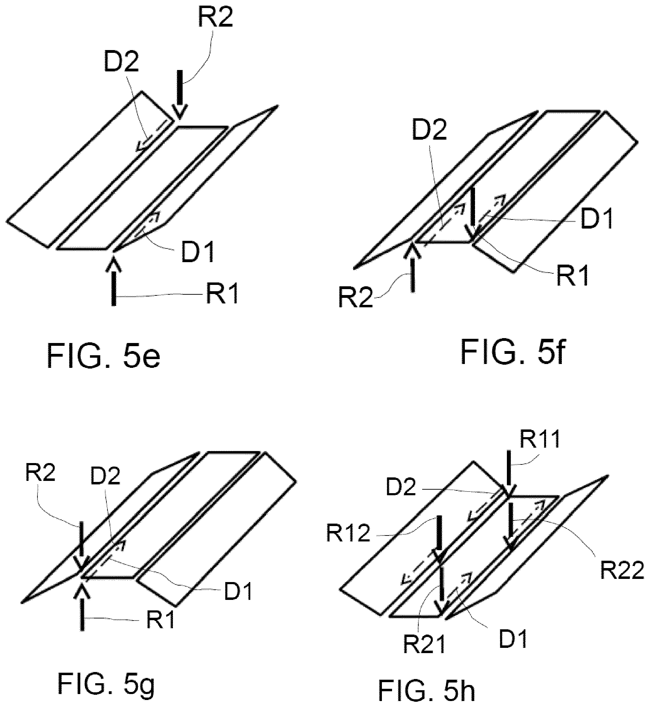

Figures 4a - 5h show examples of positioning welding robots for carrying out the examples of the methods of figures 1a - 3 when welding together three plates. Particularly, the examples of figures 4a, 5a, 5b and 5h may be suitable for any of the methods of figures 1a - 2b and the examples of figures 4b, 5c, 5d and 5h for any of the methods described in connection with figure 3.

In all these examples, a third plate 30 may be provided. The third plate 30 may comprise a top horizontal surface 31, a bottom horizontal surface 32 opposite to the top surface 31, a first side-edge (not shown) and a second side-edge (not shown) opposite to the first side-edge of the third plate 30.

In the example of figure 4a, removing material from the first plate 10 may comprise the steps substantially as explained in connection with any of the examples of figures 1a - 2b and also removing further material from the top surface 11 and the second side-edge 14 to obtain a second adapted weld region of the first plate 10. The second adapted weld region may comprise an inclined portion 112 of the top surface near the second side-edge 14 and a straight second side-edge 141 similarly to that explained in connection with figure 1b but near the second side-edge 14 of the first plate 10.

In this example, the method of joining plates may further comprise machining or bevelling the third plate 30 by removing material from the top surface 31 and the first side-edge of the third plate 30 to obtain an adapted weld region. The adapted weld region may comprise an inclined portion 311 of the top surface near the first side-edge of the third plate 30. In some cases, the method exemplified in figure 4a may further comprise machining the third plate 30 by removing material from the bottom surface 32 and the first side-edge of the third plate 30 to obtain an inclined portion 321 of the bottom surface near the first side-edge of the third plate 30.

In the examples of figure 4a, the method of joining three plates at an angle may comprise providing the first plate 10 in a horizontal position such that the first 131 and second 141 straight side-edges may be substantially vertical. The second plate 20 and third plate 30 may be provided in an inclined position with the same or different angle with respect to the horizontal such that the inclined portion 211 of the top surface of the second plate 20 substantially abuts the straight first side-edge 131 of the first plate 10 and the inclined portion 311 of the top surface of the third plate 30 substantially abuts the straight second side-edge 141 of the first plate 10. This may be done by providing any well-known supports for the second and third plates such that they can be positioned in an inclined position. In some cases, the supports may fix the plates through clamps or jigs or they may be platforms. In some cases, the supports may be fixed or adaptable. In more cases, the supports may further be rotatable and/or they may comprise hydraulic or pneumatic alignment mechanisms.

Further in this example, the inclined portions 221 and 321 of the bottom surfaces of respectively the second 20 and third 30 plates may be horizontal thus extending the bottom surface 12 of the first plate. As explained above, the change in direction of a wall defined by welding together the three plates does no longer coincide with a welding zone.

In this example, a pair of welding robots R1 and R2 may be displaceable provided facing the top surfaces 11, 21, 31 of the plates 10, 20, 30. The welding robots R1 and R2 may each comprise a gun or nozzle 41, 42 with e.g. pressurized or gravity flux feed delivery for carrying out e.g. a submerged arc welding (SAW) process. Alternatively, other known welding processes may be used that may or may not involve a shielding gas. For example gas metal arc welding (GMAW), shielded metal arc welding (SMAW) or flux-cored arc welding (FCAW) and even other welding processes typically employed as low-cost, non-structural or provisional weldings may be foreseen depending on circumstances.

The robots may be provided with sensors or other detectors able to e.g. capture images so as to follow e.g. the side-edges not being welded as guides. In some examples, the robots may be arranged to be displaceable within predefined guides or rails. In some examples, the robots may comprise wheels, rollers or runners. Alternatively, magnetized wheels may be used. Other known welding processes may also be foreseen.

In this example, the robots R1 and R2 may be arranged in parallel such that welding zones respectively defined between the inclined portions 111 and 112 of the top surfaces 11 and 21 of the first 10 and second 20 plates and the top surface 31 of the third plate 30 may be respectively welded substantially at the same time. In this example, the welding robots may be displaceable in the same direction. In further examples, the robots may be displaceable along opposite directions. In these cases, their (substantially parallel) trajectories will cross substantially halfway. See figures 5a, 5c, 5e and 5h. An aspect of welding along opposite directions is that in some cases, depending on e.g. the width of the plates, a thermal heating level may be more distributed.

In this example, the welding robots may be arranged facing the same surface of a wall (or wall portion) of a polygonal structure that may be made by welding together plates 10, 20 and 30 with an angle in between them. Particularly the robots may be arranged facing an inner surface of the polygonal structure wall being made. In alternative examples, the robots may be arranged facing an outer surface of the polygonal structure wall being made. An aspect of welding an inner surface (concave part) is that when more plates are being joint (the polygonal structure becomes closed) it is more compact than welding an outer surface because the welding robots are always arranged inside.

An aspect of providing the first plate in a substantially horizontal position and arranging the welding robots above the plate with machining, independently on whether the weld would be left on an inner or an outer surface of the final structure being made, is that gravity also contributes to filler material deposition. See figures 4a, 4b, 5a-5d and 5h.

In further alternatives, the robots may be arranged facing opposite surfaces of the polygonal structure wall being made, however in these cases the prior steps of machining or bevelling the plates may have to be adapted to this alternative robot arrangement. See figures 5e - 5g. In these examples, at least one of the welding processes cannot be a standard SAW and necessarily needs to be another process or variation of a process not affected by the direction of material deposition with regard to the gravity force direction of actuation, such as any of GMAW, SMAW or FCAW in order to refrain the flux from undesirably falling by gravity. Additionally in these examples, the wheels or runners provided for displacing the welding robot(s) that are upside down may be magnitized to avoid falling of the robot. Alternatively a pair of wheels supporting the robots in a clamped displaceable manner may be foreseen.

The example of figure 4b differs from that of figure 4a in a similar manner as the example of figure 3 differs from the examples of figures 1a - 2b .This means that machining or bevelling the second 20 and third 30 plates may comprise respectively removing material from the bottom surfaces 22 and 32 and the first side-edges 23 of the second 20 and third 30 plates (the first side-edge of the third plate is not shown) to obtain respective adapted weld regions that may comprise inclined portions 222 and 322 of the bottom surfaces 22 and 32 near the first side-edges 23 of the second 20 and third 30 plates. And the step of providing the second 20 and third 30 plates in an inclined position with respect to the first plate 10 may comprise putting together the first 10 and second 20 plates such that the inclined portion 222 of the bottom surface of the second plate 20 substantially abuts the straight first side-edge 131 of the first plate 10 and putting together the first 10 and third 30 plates such that the inclined portion 322 of the bottom surface of the third plate substantially abuts the straight second side-edge 141 of the first plate 10.

In the example of figure 4b the pair of welding robots R1 and R2 may also be displaceable provided facing the top surface 11 of the first plate 10. In this example, the welding robots may be displaceable with the same direction. In this case however, the welding robots may weld an outer surface of a wall (or wall portion) of a portion of polygonal structure that may be made by plates 10, 20 and 30 being welded together.

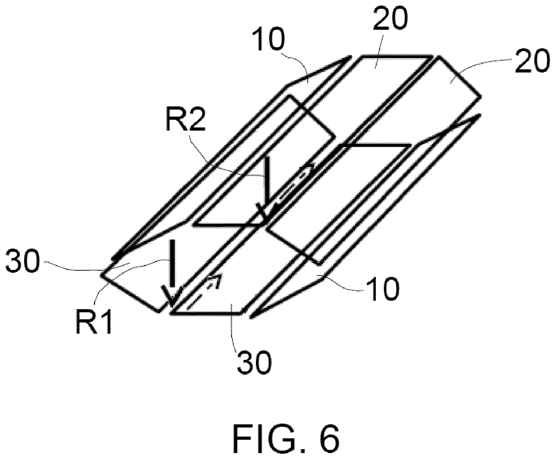

Figures 5a - 5h show more examples of positioning welding robots for carrying out any of the methods of the examples of figures 4a - 4b for welding three plates. In more alternatives, more welding robots may be foreseen as will be explained in connection with figure 6.

In the example of figure 5a, welding together the first plate with the second plate and third plate may be done by providing the two displaceable welding robots R1 and R2 in parallel facing the top surface of the first plate. In this example, a direction of displacement of welding robot R1 may be substantially opposite to that of welding robot R2. See arrows D1 and D2 in figure 5a. In these examples, each welding robot may start at an opposite longitudinal length of the plates thus crossing at half-plate length. Depending on the width of the plates, thermal effects affecting geometrical characteristics of the resulting piece may be better distributed with the robots having opposite displacement direction.

The example of figure 5b differs from that of figure 5a in that the direction (arrows D1 and D2) of displacement of the welding robots R1 and R2 may be substantially the same.

The example of figures 5c and 5d respectively differ from the examples of figures 5a and 5b in that the machining or bevelling of the second 20 and third 30 plates may be done at the bottom surfaces thereof, substantially as explained in connection with figure 3.

The examples of figures 5e - 5g respectively differ from the examples of figures 5a - 5d in that the two displaceable welding robots may be arranged in parallel facing opposite horizontal surfaces of the first plate 10. Clearly the bevels provided at the plates at each edge of the first plate would necessary be opposite in order to be able to weld at opposite surfaces of the first plate. Particularly, the example of figure 5g would involve machining or bevelling in "X" or "double V", not in a substantially "V" shape.

The example of figure 5h differs from the examples of figures 5a-5d in that two welding robots R11, R12 and R21, R22 may be provided facing each welding zone. As mentioned above, the welding zones may respectively be defined between the inclined portions 111 and 112 of the top surfaces 11 and 21 of the first 10 and second 20 plates and the top surface 31 of the third plate 30. In this example, the welding robots R11 and R12 may be displaceable in the same direction and the welding robots R21 and R22 may be displaceable in the same direction that may be opposite to that of the welding robots R11 and R12. According to this example, thus two welding robots R11 and R12 or R21 and R22 are needed for covering the whole length of the plate. E.g. robots R11 and R21 may run from 0 to half the length of the plate and robots R12 and R22 may run from half the length of the plate to the full length of the plate. In alternative examples each pair of robots may run along the same direction. In further alternatives other number of robots may be foreseen facing each welding zone, depending on e.g. the length of the plates.

Further in this example, the welding robots R11-R22 may be arranged facing the same surface of a wall (or wall portion) of a polygonal structure that may be made by welding together the plates with an angle in between them.

In more examples, more welding robots may be provided facing each welding zone. By increasing the number of robots a reduction of thermal effects can be attained in some cases. In still more examples, the welding robots may be arranged facing opposite surfaces (top or bottom) of the first plate and/or they may be arranged to be displaceable in the same direction substantially as explained in connection with figures 5b, 5c, 5f or 5g.

Clearly, many other options and/or combinations thereof may also be possible, adapting the bevels/machinings, the number, position and direction of filler material deposition and direction of progress of robots and/or welding processes to each combination.

When polygonal structures such as a polygonal wind turbine tower or tower section are made with the methods substantially as hereinbefore described, the method may comprise welding plates in trios substantially as hereinbefore described in any of these examples or combinations thereof. Once a first group of three plates is welded a second group of three plates may be welded in a similar manner and then, depending on the number of sides of the polygonal structure to be made, the plates welded in threes may be welded to each other to form the desired polygonal structure. Alternatively, the plates may be welded in pairs and then the pairs may be welded together.

The example of figure 6 shows a method of joining two groups of three plates that were previously joined together with any of the methods substantially as hereinbefore described. In this example, to join two previously joined groups of three plates, two welding robots R1 and R2 may be provided facing opposite sides of the final polygonal structure being made (six sides in this example). In this example, welding robot R1 may face a welding zone defined between the third plates 30 of the two groups of three plates being previously joined and welding robot R2 may face a welding zone defined between the second plates 20 of the two groups of three plates being previously joined. An aspect of providing two or more welding robots at each welding zone (edges to be joined) is that deformations due to heating can be better controlled. In order to carry out these welding processes, the second and third plates of the two groups will need adequate bevels or machinings substantially as hereinbefore described in order to be adapted to be welded to each other.

In some examples, the number of sides of the polygonal cross-sections that may be formed by welding plates at an angle may be an even number. This way, at least in terms of structural behaviour the polygonal cross-sections are characterized by sectional inertia symmetry thus enabling optimized use of the structure e.g. as a polygonal wind turbine tower section.

Furthermore, although standardized steel plates may vary their dimensions as a function of the region/market, they may usually be found between 10 to 12 meters long and 2.5 to 3 meters wide. With these standardized sizes of plates, polygonal structures of six, eight, ten or twelve sides are specially suitable for building wind turbine towers or tower sections.

In some examples, welding may comprise supplying a filler material. Examples of filler material may be standard wires or electrodes that may depend on the material of the plates. In general, all welding processes are tightly controlled by ISO standards or Eurocode 4. The filler material may further depend on the type of welding process that may be used.

In some examples, a SAW processes may be used. In these cases, electrodes with diameters between 3.2 to 4 mm may be foreseen. However, when various welding robots are involved thicker diameters may also be used.

In more examples, GMAW processes may be used. In these examples, tubular electrodes with diameters between 1.2 to 2 mm may be used. In some of these cases, a shielding gas, e.g. argon or CO2, passive or active, may also be supplied.

In further examples, SMAW processes may be used. In these examples, thinner electrodes that may be coated with a solid flux may be used. In some of these cases, a further protection gas may still be required.

In still further examples, flux-cored arc welding (FCAW) processes may be used. In these examples, the electrodes instead of having a solid flux coating may comprise the solid flux provided inside.

Clearly many other alternatives or combinations thereof may be foreseen.

In some examples, the welding angle may range from 50° to 110°, preferably from 50° to 90° and more preferably from 60° to 80°. The welding angle may be defined as a function of other well-known welding parameters such as the filler material, the voltage and amperage of the weld, the metal plate thicknesses, the type of metal of the plates, the shielding gas among others to ensure the weld fully penetrates to the base material (the plates).

In all examples, the sides forming the polygonal cross-sections may have substantially the same length. This means that the plane figures (polygon) forming the cross-sections may be regular polygons.

In all examples, initially the plates to be welded with an angle in between may be rectangular plates. In alternatives, the plates may initially be trapezoidal or triangular plates.

In all examples, the metal plates to be welded with an angle in between may be cut *in situ* e.g. from the same standard rectangular plates using a CNC machine. Alternatively, the metal plates may be delivered in a cut condition. The plates may further be delivered in a ready to use condition, e.g. with an anticorrosive cover.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow.

## Claims

1. A method of joining plates at an angle in between them, wherein the method comprises
providing a first plate (10) having opposed top (11) and bottom (12) surfaces, a first side-edge (13), and a second side-edge (14) opposite to the first side-edge (13),
providing a second plate (20) having opposed top (21) and bottom (22) surfaces and a first side-edge (23),
removing material from the top surface (11) and the first side-edge (13) of the first plate (10) to obtain a first adapted weld region of the first plate, wherein the first adapted weld region of the first plate has an inclined portion (111; 111') of the top surface near the first side-edge (13) of the first plate and a straight first side-edge (131; 131'),
removing material from one of the top (21) and bottom (22) surfaces and the first side-edge (23) of the second plate to obtain an adapted weld region of the second plate, wherein the adapted weld region of the second plate comprises a first inclined portion (211; 211'; 222) of the one of the top (21) and bottom (22) surfaces near the first side-edge (23) of the second plate,
providing the first plate (10) in a substantially horizontal position such that the straight first side-edge (131; 131') of the first plate is substantially vertical,
providing the second plate (20) in an inclined position with respect to the first plate (10) such that the first inclined portion (211; 211'; 222) of the one of the top and bottom surfaces of the second plate (20) substantially abuts the straight first side-edge (131; 131') of the first plate, and
welding together the first and second plates.

2. The method of claim 1, further comprising removing material from the other of the top (21) and bottom (22) surfaces and the first side-edge (23) of the second plate (20) such that the adapted weld region of the second plate further comprises an inclined portion (221) of the other of the top and bottom surfaces near the first side-edge (23) of the second plate, wherein the inclined portion (221) of the other of the top and bottom surfaces of the second plate is substantially horizontal when the second plate (20) is in the inclined position.

3. The method of any of claims 1 or 2, further comprising
providing a third plate (30) having opposed top (31) and bottom (32) surfaces and a first side-edge,
removing material from the top surface (11) and the second side-edge (14) of the first plate to obtain a second adapted weld region of the first plate wherein the second adapted weld region of the first plate has an inclined portion (112) of the top surface (11) near the second side-edge (14) of the first plate and a straight second side-edge (141),
removing material from one of the top (31) and bottom (32) surfaces and the first side-edge of the third plate (30) to obtain an adapted weld region of the third plate, wherein the adapted weld region of the third plate comprises a first inclined portion (311; 322) of the one of the top and bottom surfaces near the first side-edge of the third plate,
providing the third plate (30) in an inclined position with respect to the first plate (10) such that the first inclined portion (311; 322) of the one of the top and bottom surfaces of the third plate substantially abuts the straight second side-edge of the first plate (141), and
welding together the first (10) and third plate (30).

4. The method of claim 3, wherein welding together the first (10) and third (30) plate is done substantially at the same time as welding together the first (10) and second (20) plate.

5. The method of claim 4, wherein welding together is done through two or more displaceable welding robots (R1, R2) arranged in parallel substantially facing the top surface (11) of the first plate.

6. The method of claim 5, wherein the welding robots (R1, R2) are displaced along parallel and opposite directions (D1, D2).

7. The method of any of claims 1 - 6, wherein the adapted weld region of the second plate (20) further comprises a second inclined portion (212) of one of the top and bottom surfaces, wherein an angle of inclination of the second inclined portion (212) is lower than an angle of inclination of the first inclined portion (211; 211').

8. The method of any of claims 3 - 7, wherein the adapted weld region of the third plate (30) further comprises a second inclined portion of the one of the top and bottom surfaces, wherein an angle of inclination of the second inclined portion is lower than an angle of inclination of the first inclined portion (311; 322).

9. The method of any of claims 1 - 8, wherein the inclined portion (111; 111'; 112) of the first adapted weld region of the first plate and a top surface (21) of the second plate or a second inclined portion (212) of the top surface define a welding angle when the second plate (20) is in the inclined position, wherein the welding angle (α; α') is in a range from 50° to 110°, preferably from 50° - 90°, and more preferably from 60 - 80°.

10. The method of any of claims 1 - 9, wherein the first side-edge (13; 23) and a second side-edge (14; 24) opposite to the first side-edge of the plates are parallel to each other along a length of the plates (10; 20).

11. The method of any of claims 1 - 10, wherein a distance between the first side-edge and a second side-edge opposite to the first side-edge of the plates decreases or increases along a length of the plates.

12. A polygonal wind turbine tower section made by joining together n number of plates (10, 20, 30) at an angle in between them according to the method of any of claims 1 - 11 so as to form a polygonal cross-section such that vertices (B) of the polygonal cross-section do not coincide with welding points between plates.

13. The polygonal wind turbine tower section of claim 12, wherein the polygonal cross-section comprises an even number of faces, particularly from 6 to 12 even number of faces.

14. A wind turbine tower comprising one or more tower sections according to any of claims 12 or 13, the tower sections being arranged vertically one above the other.

15. A wind turbine comprising a nacelle being supported on a tower, wherein the tower comprises one or more polygonal tower sections according to any of claims 12 or 13.

## Patentansprüche

1. Ein Verfahren zur Verbindung von Platten in einem Winkel zwischen diesen, wobei das Verfahren folgendes umfasst
bereitstellen von einer ersten Platte (10), die eine obere (11) und eine gegenüber liegende untere (12) Oberfläche, eine erste Seitenkante (13), und eine gegenüber der ersten Seitenkante (13) liegende zweite Seitenkante (14) hat,
bereitstellen von einer zweiten Platte (20), die eine obere (21) und eine gegenüber liegende untere (22) Oberfläche und eine erste Seitenkante (23) hat,
entfernen von Material von der oberen Oberfläche (11) und von der ersten Seitenkante (13) der ersten Platte (10), um einen ersten angepassten Schweißbereich der ersten Platte zu erhalten, wobei der erste angepasste Schweißbereich der ersten Platte einen geneigten Teil (111; 111') der oberen Oberfläche in der Nähe von der ersten Seitenkante (13) der ersten Platte und eine gerade erste Seitenkante (131; 131') hat,
entfernen von Material von einer von der oberen (21) und der unteren (22) Oberfläche und von der ersten Seitenkante (23) der zweiten Platte, um einen angepassten Schweißbereich der zweiten Platte zu erhalten, wobei der angepasste Schweißbereich der zweiten Platte einen ersten geneigten Teil (211; 211'; 222) der einen von der oberen (21) und der unteren (22) Oberfläche in der Nähe von der ersten Seitenkante (23) der zweiten Platte umfasst,
bereitstellen von der ersten Platte (10) in einer im Wesentlichen horizontalen Position, so dass die gerade erste Seitenkante (131; 131') von der ersten Platte im Wesentlichen vertikal ist,
bereitstellen von der zweiten Platte (20) in einer geneigten Position bezüglich der ersten Platte (10), so dass der erste geneigte Teil (211; 211'; 222) der einen von der oberen und der unteren Oberfläche der zweiten Platte (20) im Wesentlichen an die gerade erste Seitenkante (131; 131') der ersten Kante angrenzt, und
zusammenschweißen der ersten und der zweiten Platte.

2. Das Verfahren des Anspruchs 1, weiterhin umfassend das Entfernen von Material von der anderen von der oberen (21) und der unteren (22) Oberfläche und der ersten Seitenkante (23) der zweiten Platte (20), so dass der angepasste Schweißbereich der zweiten Platte weiterhin einen geneigten Teil (221) von der anderen von der oberen und unteren Oberfläche in der Nähe von der ersten Seitenkante (23) der zweiten Platte umfasst, wobei der geneigte Teil (221) von der anderen von der oberen und unteren Oberfläche der zweiten Platte im Wesentlichen horizontal ist, wenn die zweite Platte (20) in der geneigten Position ist.

3. Das Verfahren von einem der Ansprüche 1 oder 2, weiterhin umfassend
bereitstellen von einer dritten Platte (30), die eine obere (31) und eine gegenüber liegende untere (32) Oberfläche und eine erste Seitenkante hat,
entfernen von Material von der oberen Oberfläche (11) und von der zweiten Seitenkante (14) der ersten Platte, um einen zweiten angepassten Schweißbereich der ersten Platte zu erhalten, wobei der zweite angepasste Schweißbereich der ersten Platte einen geneigten Teil (112) der oberen Oberfläche (11) in der Nähe von der zweiten Seitenkante (14) der ersten Platte und eine gerade zweite Seitenkante (141) hat,
entfernen von Material von einer von der oberen (31) und der unteren (32) Oberfläche und von der ersten Seitenkante der dritten Platte (30), um einen angepassten Schweißbereich der dritten Platte zu erhalten, wobei der angepasste Schweißbereich der dritten Platte einen ersten geneigten Teil (311; 322) der einen von der oberen und unteren Oberfläche in der Nähe von der ersten Seitenkante der dritten Platte umfasst,
bereitstellen von der dritten Platte (30) in einer geneigten Position bezüglich der ersten Platte (10), so dass der erste geneigte Teil (311; 322) von der einen der oberen und der unteren Oberfläche der dritten Platte im Wesentlichen an die gerade zweite Seitenkante der ersten Kante (141) angrenzt, und
zusammenschweißen der ersten (10) und der dritten Platte (30).

4. Das Verfahren des Anspruchs 3, wobei das Zusammenschweißen von der ersten (10) und der dritten (30) Platte im Wesentlichen zum gleichen Zeitpunkt als das Zusammenschweißen von der ersten (10) und der zweiten (20) Platte durchgeführt wird.

5. Das Verfahren des Anspruchs 4, wobei das Zusammenschweißen durch zwei oder mehrere verschiebbare Schweißroboter (R1, R2) durchgeführt wird, die parallel im Wesentlichen der oberen Oberfläche (11) der ersten Platte zugewandt angeordnet sind.

6. Das Verfahren des Anspruchs 5, wobei die Schweißroboter (R1, R2) entlang paralleler und entgegengesetzter Richtungen (D1, D2) verschoben werden.

7. Das Verfahren von einem der Ansprüche 1 - 6, wobei der angepasste Schweißbereich der zweiten Platte (20) weiterhin einen zweiten geneigten Teil (212) von einer von der oberen und der unteren Oberfläche umfasst, wobei ein Neigungswinkel von dem zweiten geneigten Teil (212) geringer als ein Neigungswinkel von dem ersten geneigten Teil (211; 211') ist.

8. Das Verfahren von einem der Ansprüche 3 - 7, wobei der angepasste Schweißbereich der dritten Platte (30) weiterhin einen zweiten geneigten Teil der einen von der oberen und der unteren Oberfläche umfasst, wobei ein Neigungswinkel von dem zweiten geneigten Teil geringer als ein Neigungswinkel von dem ersten geneigten Teil (311; 322) ist.

9. Das Verfahren von einem der Ansprüche 1 - 8, wobei der geneigte Teil (111; 111'; 112) von dem ersten angepassten Schweißbereich der ersten Platte und eine obere Oberfläche (21) der zweiten Platte oder ein zweiter geneigter Teil (212) von der oberen Oberfläche einen Schweißwinkel definieren, wenn sich die zweite Platte (20) im geneigten Teil befindet, wobei der Schweißwinkel (a; a') im Bereich von 50° bis 110°, vorzugsweise von 50° - 90° und noch besser von 60 - 80° liegt.

10. Das Verfahren von einem der Ansprüche 1 - 9, wobei die erste Seitenkante (13; 23) und eine zweite Seitenkante (14; 24), die der ersten Seitenkante der Platten gegenüber liegt, parallel zu einander entlang einer Länge der Platten (10; 20) sind.

11. Das Verfahren von einem der Ansprüche 1 - 10, wobei eine Entfernung zwischen der ersten Seitenkante und einer zweiten Seitenkante, die der ersten Seitenkante der Platten gegenüber liegt, entlang einer Länge der Platten geringer oder größer wird.

12. Ein polygonaler Windturbinenturmabschnitt, der durch Verbindung von n Platten (10, 20, 30) in einem Winkel zwischen diesen nach dem Verfahren von einem der Ansprüche 1 - 13 hergestellt wird, um ein polygonaler Querschnitt zu bilden, so dass Eckpunkte (B) des polygonalen Querschnitts mit den Schweißpunkten zwischen den Platten nicht zusammenfallen.

13. Der polygonale Windturbinenturmabschnitt des Anspruchs 12, wobei der polygonale Querschnitt eine gerade Anzahl von Seiten, insbesondere eine gerade Anzahl von 6 bis 12 Seiten, umfasst.

14. Ein Windturbinenturm umfassend einen oder mehrere Turmabschnitte nach einem der Ansprüche 12 oder 13, wobei die Turmabschnitte vertikal übereinander angeordnet sind.

15. Eine Windturbine umfassend eine Gondel, die auf einem Turm gestützt ist, wobei der Turm einen oder mehrere polygonale Turmabschnitte nach einem der Ansprüche 12 oder 13 umfasst.

## Revendications

1. Un procédé de jonction de plaques à un angle entre celles-ci, comprenant le procédé
fournir une première plaque (10) ayant des surfaces supérieure (11) et inférieure (12) opposées, un premier côté latéral (13), et un deuxième côté latéral (14) opposé au premier côté latéral (13),
fournir une deuxième plaque (20) ayant des surfaces supérieure (21) et inférieure (22) opposées et un premier côté latéral (23),
enlever du matériau de la surface supérieure (11) et du premier côté latéral (13) de la première plaque (10) afin d'obtenir une première région de soudage adaptée de la première plaque, dans lequel la première région de soudage adaptée de la première plaque a une partie inclinée (111 ; 111') de la surface supérieure près du premier côté latéral (13) de la première plaque et un premier côté latéral droit (131 ; 131'),
enlever du matériau de l'une des surfaces supérieure (21) et inférieure (22) et du premier côté latéral (23) de la deuxième plaque afin d'obtenir une région de soudage adaptée de la deuxième plaque, dans lequel la région de soudage adaptée de la deuxième plaque comprend une première partie inclinée (211 ; 211' ; 222) de l'une des surfaces supérieure (21) et inférieure (22) près du premier côté latéral (23) de la deuxième plaque,
fournir la première plaque (10) dans une position essentiellement horizontale de façon que le premier côté latéral droit (131 ; 131') de la première plaque est essentiellement vertical,
fournir la deuxième plaque (20) dans une position inclinée par rapport à la première plaque (10) de façon que la première partie inclinée (211 ; 211' ; 222) de l'une des surfaces supérieure et inférieure de la deuxième plaque (20) essentiellement jouxte le premier côté latéral droit (131 ; 131') de la première plaque, et
souder conjointement les plaques première et deuxième.

2. Le procédé de la revendication 1, comprenant en outre enlever du matériau de l'autre de la surface supérieure (21) et inférieure (22) et du premier côté latéral (23) de la deuxième plaque (20) de façon que la région de soudage adaptée de la deuxième plaque comprend en outre une partie inclinée (221) de l'autre des surfaces supérieure et inférieure près du premier côté latéral (23) de la deuxième plaque, dans lequel la partie inclinée (221) de l'autre des surfaces supérieure et inférieure de la deuxième plaque est essentiellement horizontale lorsque la deuxième plaque (20) est dans la position inclinée.

3. Le procédé de l'une quelconque des revendications 1 ou 2, comprenant en outre
fournir une troisième plaque (30) ayant des surfaces supérieure (31) et inférieure (32) opposées et un premier côté latéral,
enlever du matériau de la surface supérieure (11) et du deuxième côté latéral (14) de la première plaque afin d'obtenir une deuxième région de soudage adaptée de la première plaque, dans lequel la deuxième région de soudage adaptée de la première plaque a une partie inclinée (112) de la surface supérieure (11) près du deuxième côté latéral (14) de la première plaque et un deuxième côté latéral droit (141),
enlever du matériau de l'une des surfaces supérieure (31) et inférieure (32) et du premier côté latéral de la troisième plaque (30) afin d'obtenir une région de soudage adaptée de la troisième plaque, dans lequel la région de soudage adaptée de la troisième plaque comprend une première partie inclinée (311 ; 322) de l'une des surfaces supérieure et inférieure près du premier côté latéral de la troisième plaque,
fournir la troisième plaque (30) dans une position inclinée par rapport à la première plaque (10) de façon que la première partie inclinée (311 ; 322) de l'une des surfaces supérieure et inférieure de la troisième plaque essentiellement jouxte le deuxième côté latéral droit de la première plaque (141), et
souder conjointement les plaques première (10) et deuxième (30).

4. Le procédé de la revendication 3, dans lequel le soudage conjoint de la première (10) et la troisième (30) plaque est effectué essentiellement en même temps que le soudage conjoint de la première (10) et la deuxième (20) plaque.

5. Le procédé de la revendication 4, dans lequel le soudage conjoint est effectué moyennant deux ou plusieurs robots de soudage déplaçables (R1, R2) disposés en parallèle essentiellement face à la surface supérieure (11) de la première plaque.

6. Le procédé de la revendication 5, dans lequel les robots de soudage (R1, R2) sont déplacés le long de directions parallèles et opposées (D1, D2).

7. Le procédé de l'une quelconque des revendications 1 - 6, dans lequel la région de soudage adaptée de la deuxième plaque (20) comprend en outre une deuxième partie inclinée (212) d'une des surfaces supérieure et inférieure, dans lequel un angle d'inclination de la deuxième partie inclinée (212) est inférieur à un angle d'inclination de la première partie inclinée (211 ; 211').

8. Le procédé de l'une quelconque des revendications 3 - 7, dans lequel la région de soudage adaptée de la troisième plaque (30) comprend en outre une deuxième partie inclinée de l'une des surfaces supérieure et inférieure, dans lequel un angle d'inclination de la deuxième partie inclinée est inférieur à un angle d'inclination de la première partie inclinée (311 ; 322).

9. Le procédé de l'une quelconque des revendications 1 - 8, dans lequel la partie inclinée (111 ; 111' ; 112) de la première région de soudage adaptée de la première plaque et une surface supérieure (21) de la deuxième plaque ou une deuxième partie inclinée (212) de la surface supérieure définissent un angle de soudage lorsque la deuxième plaque (20) est dans la position inclinée, dans lequel l'angle de soudage (a ; a') est dans un intervalle de 50° à 110°, de préférence de 50° - 90°, et plus préférablement de 60 - 80°.

10. Le procédé de l'une quelconque des revendications 1 - 9, dans lequel le premier côté latéral (13 ; 23) et un deuxième côté latéral (14 ; 24) opposé au premier côté latéral des plaques sont parallèles l'un à l'autre le long d'une longueur des plaques (10 ; 20).

11. Le procédé de l'une quelconque des revendications 1 - 10, dans lequel une distance entre le premier côté latéral et un deuxième côté latéral opposé au premier côté latéral des plaques diminue ou augmente le long d'une longueur des plaques.

12. Une section de tour d'éolienne polygonale réalisée en joignant un nombre n de plaques (10, 20, 30) à un angle entre elles selon le procédé de l'une quelconque des revendications 1 - 13 afin de former une section transversale polygonale telle que des sommets (B) de la section transversale ne coïncident pas avec des points de soudage entre plaques.

13. La section de tour d'éolienne polygonale de la revendication 12, dans laquelle la section transversale polygonale comprend un nombre pair de côtés, en particulier un nombre pair de côtés allant de 6 à 12.

14. Une tour d'éolienne comprenant une ou plusieurs sections de tour selon l'une quelconque des revendications 12 ou 13, les sections de tour étant disposées en vertical l'une au-dessus des autres.

15. Une éolienne comprenant une nacelle étant supportée sur une tour, dans laquelle la tour comprend une ou plusieurs sections de tour polygonales selon l'une quelconque des revendications 12 ou 13.
